# EUROPÄISCHE PATENTSCHRIFT

(11) **EP 4 313 857 B1**
(45) Veröffentlichungstag und Bekanntmachung des Hinweises auf die Patenterteilung: **22.01.2025**
(21) Anmeldenummer: 22715184.2
(22) Anmeldetag: 30.03.2022
(51) Int. Cl.: C01B 25/02

(54) **VERFAHREN ZUR REDUKTIVEN GEWINNUNG VON ELEMENTAREM PHOSPHOR AUS PHOSPHORSÄURE, UNTER VERWENDUNG VON WASSERSTOFF ALS REDUKTIONSMITTEL.**
METHOD FOR THE REDUCTIVE RECOVERY OF ELEMENTAL PHOSPHORUS FROM PHOSPHORIC ACID, USING HYDROGEN AS A REDUCING AGENT
PROCÉDÉ D'EXTRACTION PAR RÉDUCTION DE PHOSPHORE ÉLÉMENTAIRE À PARTIR D'ACIDE PHOSPHORIQUE, AU MOYEN D'HYDROGÈNE EN TANT QU'AGENT DE RÉDUCTION

(30) Priorität: 01.04.2021 AT 712021
(43) Veröffentlichungstag der Anmeldung: 07.02.2024
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2022/052949
(87) Internationale Veröffentlichungsnummer: WO 2022/208389

(56) Entgegenhaltungen:
- WO-A1-2020/117033
- WO-A1-2020/225760
- WO-A1-2021/152386
- JP-A- 2020 180 040

## Beschreibung

Die vorliegende Erfindung betrifft ein Verfahren zur reduktiven Gewinnung von elementarem Phosphor aus Phosphorsäure, insbesondere aus unreiner Phosphorsäure, sowie Vorrichtungen zur Durchführung des erfindungsgemäßen Verfahrens.

Die Preise für Rohphosphat erfahren in letzter Zeit aufgrund der Verknappung geeigneter Rohstoffquellen eine ständige Steigerung. Zudem weisen die ausgebeuteten Phosphaterze zunehmend bedeutende Gehalte von Uran, Cadmium, Selen und weiterer gesundheitsschädlicher Begleitstoffe auf. Derartige Begleitelemente können nur mit sehr großem Aufwand entfernt werden, sodass die Verwendung von Phosphaten aus solcherart belasteten Erzen immer unwirtschaftlicher wird.

Andererseits finden sich in Abfallstoffen teilweise relativ große Gehalte an Phosphor-Verbindung. Dies trifft beispielsweise auf Klärschlamm, Tiermehl, Gülle, Lebensmittelreste (beispielsweise Fischverarbeitungsrückstände) aber auch auf Stahlwerksschlacke, Beizrückstände, Entzunderungsrückstände, Textilien, flammhemmende Kunststoffe, Waschmittel (Phosphonate), Insektizide, Herbizide und dergleichen zu. Insbesondere für die Lebensmittelherstellung und für die pharmazeutische Industrie werden hochreine Phosphor-Ausgangsstoffe benötigt, die aus elementarem Phosphor (P₄, weißer Phosphor) darstellbar sind. Die Herstellung gestaltet sich jedoch zunehmend schwierig und wird zumindest in Europa derzeit nicht mehr durchgeführt.

JP2020180040 offenbart ein Verfahren zur Herstellung von Phosphor bei dem Phosphorsäure mit Kohlenstoff und weiteren Zuschlagstoffen zu Phosphor reduziert wird.

Ein wesentliches Problem bei der Herstellung von reinem Phosphor aus Abfallstoffen liegt darin begründet, dass der an sich naheliegende Säureaufschluss dieser Ausgangsstoffe aufgrund der genannten Begleitstoffe zu relativ unreiner Phosphorsäure führt und die Verunreinigungen mit großtechnischen und damit wirtschaftlich interessanten Verfahren bislang nicht zu beseitigen waren. Darüberhinaus führt die Reduktion von Phosphorsäure mit herkömmlichen Reduktionsverfahren in nicht zu vernachlässigendem Ausmaß zur Bildung von Phosphinen (insbesondere PH₃, im Zusammenhang mit der vorliegenden Erfindung auch allgemein PHₓ), die als geruchloses Gas flüchtig und in hohem Maße toxisch sind. Die Herstellung von Phosphor konnte daher bislang durch Reduktion von Phosphorsäure aus dem Säureaufschluss der genannten Abfallstoffe nicht verantwortet werden.

Die vorliegende Erfindung stellt sich daher die Aufgabe, ein ökonomisch und ökologisch vertretbares Verfahren und entsprechende Vorrichtungen zur Herstellung von elementarem Phosphor aus den genannten und weiteren in Frage kommenden Abfallstoffen bereitzustellen, wobei auch die im Zusammenhang mit Phosphor immer zu beachtenden kritischen Sicherheitsaspekte im Auge behalten werden sollen und insbesondere die Bildung von Phosphinen hintangehalten werden soll.

Zur Lösung dieser Aufgabe ist das erfindungsgemäße Verfahren dadurch gekennzeichnet, dass als Eduktstrom Phosphorsäure zusammen mit Wasserstoff als Reduktionsmittel in einem Reaktor mit erhitzten Metallkörper, insbesondere Metallkugeln, in Kontakt gebracht und zu einem Produktgasstrom von gasförmigem P₂, H₂O und H₂ umgesetzt wird.

Die Gegenwart von H₂ als Reduktionsmittel ist an sich von vornherein erfolgversprechend, wobei die entsprechende Erhitzung der Phosphorsäure die nötige Reduktionsenergie bereitstellt. Die vorliegende Erfindung beschreitet jedoch durch die Verwendung von erhitzten Metallkörpern als Heizmittel dahingehend einen neuartigen und überraschend nutzbringenden Weg, als die Gegenwart von Metallkörpern gleichzeitig die direkte Reduktion von Phosphorsäure zu P₂, H₂O und H₂ katalysiert, sodass die Bildung von Phosphinen vollständig verhindert werden kann. Es wird daher durch das erfindungsgemäße Verfahren unmittelbar eine reine Phosphor-Spezies erhalten und die genannten unerwünschten Begleitstoffe können in der Folge aus der Gasphase abgetrennt werden.

Im Zusammenhang mit der vorliegenden Erfindung wird unter einer unreinen Phosphorsäure Phosphorsäure verstanden, die eine undefinierte Vielzahl von anorganischen und organischen Begleitstoffen enthalten kann. Jedoch kann die unreine Phosphorsäure zumindest einer groben Mechanischen Reinigung wie einer Sedimentation, Filtration oder Zentrifugation zur Entfernung von Feststoffen unterworfen werden, bevor sie als Edukt dem erfindungsgemäßen Verfahren zugeführt wird.

Die Metallkörper sind bevorzugt aus einem ferromagnetischen Metall, bevorzugt einem eisenhaltigen Metall, weiter bevorzugt aus Stahl, der bevorzugt mit Nickel legiert ist, gebildet. Der Einsatz von Metallkörpern aus den genannten Metallen ist einerseits für die weiter unten beschriebene induktive Erhitzung der Metallkörper nützlich und bringt besonders vorteilhafte katalytische Eigenschaften mit sich.

Bevorzugt wird die Phosphorsäure mit einem Wasserstoff enthaltenden Gasstrom in den Reaktor eingebracht, der die erhitzten Metallkörper enthält. Auf diese Weise werden sowohl die zu reduzierende Phosphorsäure als auch das Reduktionsmittel Wasserstoff (H₂) in einen geeigneten Reaktor eingebracht, wobei H₂ als Trägergas im Überschuss zugegeben wird, um das Gleichgewicht der Reduktionsreaktion

2 H₃PO₄ + 5 H₂ -> P₂ + 8 H₂O

sicher auf die Produktseite zu verlagern.

Gemäß einer bevorzugten Ausführungsform der vorliegenden Erfindung wird die Phosphorsäure zur Reduktion durch die erhitzten Metallkörper auf eine Temperatur von 1300°C bis 1400°C, bevorzugt 1350°C gebracht. Dies dient einerseits dazu, eine zufriedenstellende Reaktionsgeschwindigkeit zu erhalten und andererseits die genannten Begleitstoffe zuverlässig zu volatilisieren.

Um die Metallkörper zu erhitzen, kann im Rahmen der vorliegenden Erfindung dergestalt vorgegangen werden, dass die Metallkörper durch Anlegen eines elektromagnetischen Wechselfelds bei einer Induktionsfrequenz von 400 Hz (Hertz) bis 600 Hz, bevorzugt 500 Hz induktiv erhitzt werden, wie dies einer bevorzugten Ausführungsform der vorliegenden Erfindung entspricht.

Bevorzugt werden als Metallkörper Stahlkugeln mit einem Durchmesser von 3 mm bis 8 mm, bevorzugt 4 mm bis 7 mm, weiter bevorzugt 5 mm bis 6 mm eingesetzt. Kugeln weisen die maximale spezifische Oberfläche für die Katalyse der Reduktionsreaktion auf und bilden bei den genannten Durchmessern in einer Schüttung ausreichend große Zwischenräume zwischeneinander aus, sodass die Edukte und die entstehenden Produkte gasförmig zwischen den Stahlkugeln hindurchtreten können, um einen kontinuierlichen Prozess zu gestatten, bei dem Edukte kontinuierlich zugeführt und Produkt kontinuierlich abgezogen werden. Das erfindungsgemäße Verfahren kann daher große Ausbeuten liefern.

Um die Strömung zwischen den Metallkörpern weiter zu verbessern, ist die vorliegende Erfindung bevorzugt dahingehend weitergebildet, dass die Metallkörper im Reaktor bewegt werden, bevorzugt durch Anlegen eines elektromagnetischen Wechselfelds, bevorzugt mit einer Frequenz von 80 Hz bis 120 Hz, weiter bevorzugt mit einer Frequenz von 100 Hz. Bei derartigen Frequenzen wird in die Metallkörper, insbesondere Stahlkugeln, Wärme nicht in nennenswertem Ausmaß eingebracht, sondern die Metallkörper werden vielmehr durch die Wirkung der Lorentz-Kraft zu leichten Bewegungen angeregt, sodass die Zwischenräume zwischen den Metallkörpern kontinuierlich verändert werden. Hierdurch wird Tendenzen zu Verstopfung, Kaminbildung und dauerhafter Ablagerung von Edukten beziehungsweise Reaktions(zwischen)produkten entgegengewirkt und der erfindungsgemäße Prozess läuft auch über lange Zeiten stabil ab, während die Oberflächen der Metallkörper durch die Bewegungen und die hierdurch bedingte Reibung der Metallkörper aneinander gereinigt und somit für die Katalyse zugänglich gehalten werden. Die Schüttung der Metallkörper wird durch die Wirkung des angelegten niederfrequenten elektromagnetischen Wechselfelds gleichsam fluidisiert, was zusätzlich durch den Einstrom der Edukte zusammen mit H₂ und gegebenenfalls einem Strom inerten Umwälzgases gefördert werden kann.

Gemäß einer bevorzugten Ausführungsform der vorliegenden Erfindung wird mit dem Eduktstrom weiters P₂O₅ mit den erhitzten Metallkörpern in Kontakt gebracht. P₂O₅ kann aus verschiedenen dem erfindungsgemäßen Verfahren vorgelagerten industriellen Verfahren bereitstehen oder durch Vorkalzinieren zumindest eines Teils der Phosphorsäure gebildet werden. Das erfindungsgemäße Verfahren ermöglicht somit auch die Gewinnung von elementarem Phosphor aus anderen Phosphor-Spezies als Phosphorsäure. Beispielsweise entsteht P₂O₅ bei dem Verfahren gemäß der internationalen Anmeldung PCT/IB2020/062183 der Anmelderin der vorliegenden Anmeldung.

Bei der Durchführung des erfindungsgemäßen Verfahrens fallen große Wärmemengen an, die bevorzugt nutzbringend abgebaut werden müssen, um das gebildete Produkt, elementaren Phosphor, weiterverarbeiten zu können. Eine bevorzugte Ausführungsform der vorliegenden Erfindung sieht in diesem Zusammenhang vor, dass der Produktgasstrom aus gasförmigem P₂, H₂O und H₂ abgezogen und zur Bildung von gasförmigem P₄ einer Abkühlung auf Temperaturen zwischen 280°C und 350°C unterworfen wird. Gasförmiger P₄ stellt eine für die weitere Verarbeitung besonders interessante Phosphor-Spezies dar.

In diesem Zusammenhang ist es weiters vorgesehen, dass die Wärme der Abkühlung des Produktgasstroms zur Erwärmung des Eduktstroms eingesetzt wird, wie dies einer bevorzugten Ausführungsform der vorliegenden Erfindung entspricht. Die Vorwärmung des Eduktstroms erhöht die anfängliche Reaktionskinetik in bedeutendem Ausmaß und vermindert somit zusätzlich die Bildung von unerwünschten Zwischenprodukten. Die Reinheit des gebildeten elementaren Phosphors wird hierdurch weiter erhöht.

Elementarer Phosphor ist bekanntermaßen höchst sensibel in der Handhabung. Die vorliegende Erfindung ist daher bevorzugt dahingehend weitergebildet, dass aus dem gekühlten Produktgasstrom gasförmiges P₄ zu flüssigem P₄ und gasförmiges H₂O zu flüssigem H₂O kondensiert und von H₂ abgetrennt werden und H₂ wieder der Reduktion zugeführt wird. Dies findet in einem geeigneten Kondensator statt, in welchem sich flüssiges P₄ und flüssiges H₂O in einer Wanne sammeln, aus welcher das P₄ durch Dekantieren vom Wasser getrennt werden kann. Das wie oben erwähnt bevorzugt im Überschuss zugegebene Reduktionsmittel H₂ kann weitgehend wiedergewonnen und zur thermischen oder stofflichen Nutzung verwendet oder dem Verfahren rückgeführt werden, was Kosten bei der Durchführung des erfindungsgemäßen Verfahrens spart.

Eine alternative Verfahrensweise im Rahmen der vorliegenden Erfindung beschreitet hinsichtlich der Weiterverarbeitung des Produktgasstrom aus gasförmigem P₂, H₂O und H₂ aus dem Reaktor, der die Metallkörper enthält, einen anderen Weg, bei dem bei der Kühlung des Produktgasstrom auch Synthesegas erhalten wird. Hierzu ist es gemäß einer bevorzugten Ausführungsform der vorliegenden Erfindung vorgesehen, dass der Produktgasstrom aus gasförmigem P₂, H₂O und H₂ in eine Säule aus Kohlenstoffträgern, insbesondere aus Holzkohle, eingeleitet wird und in der Säule mit zusätzlich in die Säule eingebrachtem Eduktstrom gekühlt und reduziert wird.

Die Reduktion wird gemäß dieser Ausführungsform bevorzugt derart betrieben, dass aus der Säule P₄, CO und H₂ als sekundärer Produktgasstrom abgezogen und einer Abkühlung auf Temperaturen zwischen 280°C und 350°C unterworfen wird, wobei bevorzugt die Abkühlung durch Zugabe von flüssigem Wasser unter Umwandlung von CO aus dem sekundären Produktgasstrom zu CO₂ und weiterem gasförmigen H₂ erfolgt. Hierdurch bleibt P₄ erhalten und bei der Abkühlung mit Wasser gebildetes CO₂ und das bereits vor der Kühlung vorhandene und das durch eine Wassergas-Shift Reaktion zusätzlich gebildete H₂ können als Transportgas im Falle des CO₂ und als Reduktionsmittel im Falle von H₂ dem Verfahren auf der Stufe des Eduktstroms, der mit den Metallkörpern in Kontakt gebracht wird, wiederverwendet werden. Die Wassergas-Shift Reaktion folgt der Reaktionsgleichung

H₂O + CO -> H₂ + CO₂

Hieraus ist ersichtlich, dass durch die Zugabe von in überstöchiometrischem Maß zugegebenem Wasser zusätzlich H₂ gebildet wird.

Gemäß einer bevorzugten Ausführungsform der vorliegenden Erfindung werden P₄, CO₂ und gasförmiges H₂ in ein Wasserbad geleitet, aus welchem P₄ abgetrennt wird. Aus dem Wasserbad entweichen gasförmig H₂, CO₂ und zu geringen Teilen H₂O als Gasfeuchte entsprechend dem Taupunkt des Wassers. Ein Teil des Wasser verbleibt im Wasserbad und der elementare Phosphor kann wie schon zuvor im Zusammenhang mit der ersten Variante der vorliegenden Erfindung beschrieben durch Dekantieren gewonnen werden.

Eine erfindungsgemäße Vorrichtung zur Durchführung des erfindungsgemäßen Verfahrens in einer ersten Variante umfasst einen von einem feuerfest ausgekleideten Gehäuse gebildeten Reaktor, zumindest eine den Reaktor an seiner Außenseite umgebende Induktionsvorrichtung, eine Zuführvorrichtung für einen Eduktstrom aus Phosphorsäure zusammen mit Wasserstoff als Reduktionsmittel an einem unteren Ende des Reaktors und ist dadurch gekennzeichnet, dass der Reaktor zumindest teilweise mit einer Schüttung aus Metallkörpern, bevorzugt Metallkugeln befüllt ist. Die vorliegende Erfindung beschreitet hierbei durch die Verwendung von erhitzten Metallkörpern als Heizmittel dahingehend einen neuartigen und überraschend nutzbringenden Weg, als die Gegenwart von Metallkörpern die direkte Reduktion von Phosphorsäure zu P₂, H₂O und H₂ katalysiert, sodass die Bildung von Phosphinen vollständig verhindert werden kann.

Bevorzugt sind die Metallkörper von Stahlkugeln mit einem Durchmesser von 3 mm bis 8 mm, bevorzugt 4 mm bis 7 mm, weiter bevorzugt 5 mm bis 6 mm gebildet. Kugeln weisen die maximale spezifische Oberfläche für die Katalyse der zuvor beschriebenen Reduktionsreaktion auf und bilden bei den genannten Durchmessern in einer Schüttung ausreichend große Zwischenräume zwischen einander aus, sodass die Edukte und die entstehenden Produkte gasförmige zwischen den Metallkörpern hindurchtreten können, um einen kontinuierlichen Prozess zu gestatten, bei dem Edukte kontinuierlich zugeführt und Produkt kontinuierlich abgezogen werden. Die erfindungsgemäße Vorrichtung kann daher große Ausbeuten liefern.

Gemäß einer bevorzugten Ausführungsform der vorliegenden Erfindung ist die erfindungsgemäße Vorrichtung dahingehend weitergebildet, dass die Induktionsvorrichtung zum Ausbilden eines elektromagnetischen Wechselfelds mit einer Induktionsfrequenz von 400 Hz (Hertz) bis 600 Hz, bevorzugt 500 Hz, eingerichtet ist und, bevorzugt gleichzeitig, zum Ausbilden eines elektromagnetischen Wechselfelds mit einer Frequenz von 80 Hz bis 120 Hz, bevorzugt 100 Hz, eingerichtet ist. Die Induktionsvorrichtung kann somit bei der genannten hohen Frequenz die Metallkörper, insbesondere Stahlkugeln geeignet erhitzen und/oder die Metallkörper beziehungsweise Stahlkugeln im Reaktor bewegen, was durch Anlegen eines elektromagnetischen Wechselfelds mit einer relativ niedrigen Frequenz von 80 Hz bis 120 Hz erfolgt. Bei derartigen Frequenzen wird in die Metallkörper beziehungsweise Stahlkörper, insbesondere Stahlkugeln, Wärme nicht in nennenswertem Ausmaß eingebracht, sondern die Metallkörper werden vielmehr durch die Wirkung der Lorentz-Kraft zu leichten Bewegungen angeregt, sodass die Zwischenräume zwischen den Stahlkörpern kontinuierlich verändert werden. Hierdurch wird Tendenzen zu Verstopfung, Kaminbildung und dauerhafter Ablagerung von Edukten beziehungsweise Reaktions(zwischen)produkten entgegengewirkt und der erfindungsgemäße Prozess läuft auch über lange Zeiten stabil ab, während die Oberflächen der Metallkörper durch die Bewegungen und die hierdurch bedingte Reibung der Metallkörper aneinander gereinigt und somit für die Katalyse zugänglich gehalten werden. Die Schüttung der Metallkörper wird durch die Wirkung des angelegten niederfrequenten elektromagnetischen Wechselfelds gleichsam fluidisiert.

Um den heißen Produktgasstrom kühlen zu können, ist die Abzugsvorrichtung mit einer Wärmetauschervorrichtung verbunden, die zur Abkühlung des Produktgasstroms auf Temperaturen zwischen 280°C und 350°C eingerichtet ist, wie dies einer bevorzugten Ausführungsform der vorliegenden Erfindung entspricht. Hierbei ist die Wärmetauschervorrichtung bevorzugt von zumindest zwei regenerativen Wärmetauschern gebildet, die wechselweise und parallel vom Produktgasstrom durchströmbar sind. Die in der erfindungsgemäßen Vorrichtung anfallenden Wärmemengen sind mitunter ausgesprochen bedeutsam, sodass die Verwendung zweier wechselweise und parallel betriebener regenerativer Wärmetauscher angemessen sein kann.

Um die Wärmetauscher zu regenerieren, kann es gemäß einer bevorzugten Ausführungsform der vorliegenden Erfindung vorgesehen sein, dass die beiden regenerativen Wärmetauscher zur Regeneration alternierend vom Eduktstrom durchströmbar sind. Die Vorwärmung des Eduktstroms erhöht die anfängliche Reaktionskinetik in bedeutendem Ausmaß und vermindert somit zusätzlich die Bildung von unerwünschten Zwischenprodukten. Die Reinheit des in der erfindungsgemäßen Vorrichtung gebildeten elementaren Phosphors wird hierdurch weiter erhöht.

Die erfindungsgemäße Vorrichtung kann dahingehend weitergebildet sein, dass ein Kondensator zum Kondensieren von P₄ und H₂O an die Wärmetauschervorrichtung anschließt. In dem Kondensator sammeln sich flüssiges P₄ und flüssiges H₂O in einer Wanne, aus welcher das P₄ durch Dekantieren vom Wasser getrennt werden kann.

Bei einer erfindungsgemäßen Vorrichtung zur Durchführung des erfindungsgemäßen Verfahrens in einer zweiten Ausführungsform ist alternativ zwischen der Induktionsvorrichtung und der Abzugsvorrichtung eine Säule aus Kohlenstoffträgern, insbesondere aus Holzkohle, angeordnet, in welche Säule eine sekundäre Zuführvorrichtung für einen Eduktstrom mündet. Dies gestattet eine alternative Verfahrensweise im Rahmen der vorliegenden Erfindung hinsichtlich der Weiterverarbeitung des Produktgasstrom aus gasförmigem P₂, H₂O und H₂ aus dem Reaktor, der die Metallkörper enthält, als mit dieser Vorrichtungsvariante bei der Kühlung des Produktgasstrom auch Synthesegas erhalten werden kann. Hierzu gestattet es diese Vorrichtung, dass der Produktgasstrom aus gasförmigem P₂, H₂O und H₂ in eine Säule aus Kohlenstoffträgern, insbesondere aus Holzkohle, eingeleitet wird und in der Säule mit zusätzlich in die Säule eingebrachtem Eduktstrom chemisch gekühlt und reduziert wird.

Das Vorsehen der Säule aus Kohlenstoffträgern, insbesondere aus Holzkohle, führt dazu, dass aus der Säule P₄, CO und H₂ als sekundärer Produktgasstrom abgezogen und einer Abkühlung auf Temperaturen zwischen 280°C und 350°C unterworfen werden können, wofür die Abzugsvorrichtung mit einer Kühlvorrichtung für den sekundären Produktgasstrom verbunden ist, wie dies einer bevorzugten Ausführungsform der vorliegenden Erfindung entspricht. Bevorzugt ist hierzu die Kühlvorrichtung von einem Wasseranschluss gebildet, der in eine Ableitung der Abzugsvorrichtung mündet. Hierdurch wird wiederum P₄ erhalten und bei der Abkühlung mit Wasser gebildetes CO₂ kann als Transportgas und das bereits vor der Kühlung vorhandene H₂ sowie CO können als Reduktionsmittel dem Verfahren auf der Stufe des Eduktstroms, der mit den Stahlkörpern in Kontakt gebracht wird, wiederverwendet werden.

Bevorzugt wird der sekundäre Produktgasstrom in ein Wasserbad geleitet, aus dem der elementare Phosphor als P₄ durch Dekantieren abgetrennt werden kann.

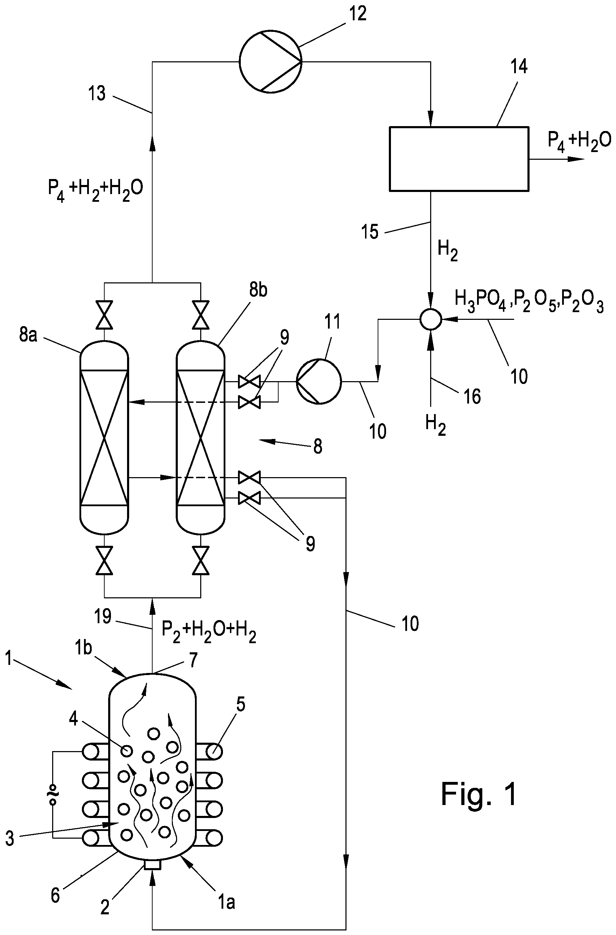

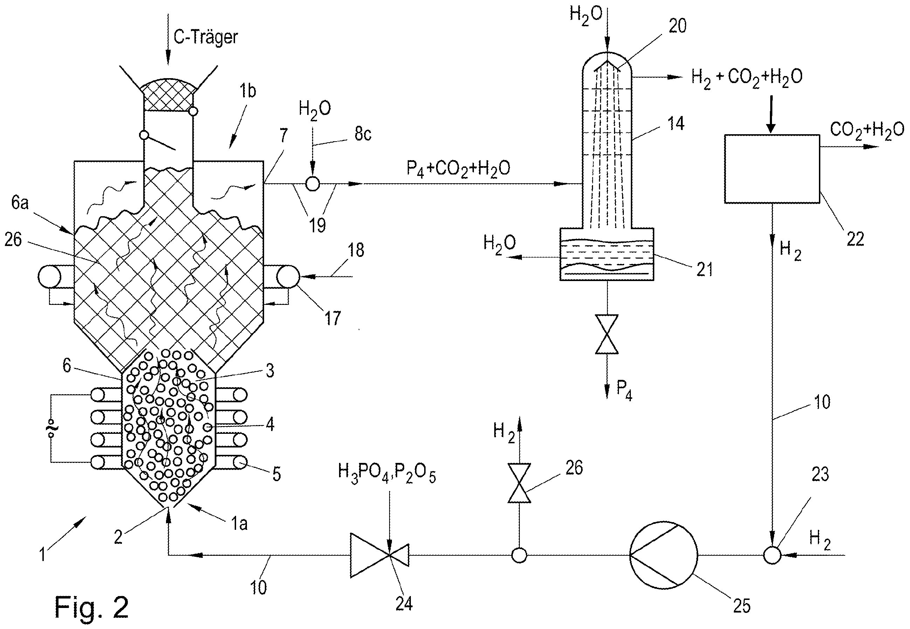

Die Erfindung wird nachfolgend anhand eines in der Zeichnung dargestellten Ausführungsbeispiels näher erläutert. In dieser zeigen Figur 1 eine schematische Darstellung einer Vorrichtung zur Durchführung des erfindungsgemäßen Verfahrens in einer ersten Variante und Figur 2 eine schematische Darstellung einer Vorrichtung zur Durchführung des erfindungsgemäßen Verfahrens in einer zweiten Variante.

In Figur 1 ist ein Reaktor mit dem Bezugszeichen 1 bezeichnet, welchem über eine am unteren Ende 1a des Reaktors angeordnete Zuführvorrichtung 2 ein Eduktstrom aus unreiner Phosphorsäure und Wasserstoffgas (H₂) zugeführt werden kann. Der Reaktor 1 ist mit einer Schüttung 3 aus Metallkörpern beziehungsweise in diesem Fall Stahlkörpern 4, hier Stahlkugeln befüllt, die mit einer Induktionsvorrichtung 5 in Form einer Induktionsspule, die das Gehäuse 6 des Reaktors umgibt erhitzt werden kann. In der Schüttung aus Stahlkörpern wird die zugeführte unreine Phosphorsäure zu einem Produktgasstrom von gasförmigem P₂, H₂O und H₂ umgesetzt. Der Produktgasstrom steigt, wie durch die Pfeilschar dargestellt, im Reaktor 1 durch die Schüttung 3 auf und wird durch die am oberen Ende 1b des Reaktors 1 angeordnete Abzugsvorrichtung 7 abgezogen.

Der Produktgasstrom gelangt hierauf über eine Ableitung 19 in die Wärmetauschervorrichtung 8 und wird dort auf Temperaturen zwischen 280°C und 350°C abgekühlt, wobei sich P₂ zu P₄ umlagert. Die Wärmetauschervorrichtung 8 umfasst zwei wechselweise und parallel vom Produktgasstrom durchströmte regenerative Wärmetauscher 8a und 8b, die zur Regeneration durch Ansteuerung der entsprechenden Ventile 9 alternierend vom Eduktstrom durchströmbar sind, um den Eduktstrom gleichzeitig vorzuwärmen. Der Eduktstrom wird hierfür über eine Zuleitung 10 zugeführt, die letztlich zur Zuführvorrichtung 2 führt und in die eine Fördervorrichtung 11 in Form eines Kompressors oder Gebläses eingeschaltet ist, um den Eduktstrom zu fördern.

Nach der Kühlung in der Wärmetauschervorrichtung 8 werden P₄, H₂ und H₂O über eine weitere Fördervorrichtung 12 durch eine Ableitung 13 in einen Kondensator 14 gefördert, worin sich in einer in Figur 1 nicht dargestellten Wanne P₄ und H₂O sammeln. Aus der Wanne können P₄ und H₂O durch Dekantieren voneinander getrennt werden. H₂ entweicht aus dem Kondensator 14 und kann dem Prozess über eine Rückleitung 15 erneut zugeführt und somit im Kreis geführt werden. Über eine weitere Zuleitung 16 kann zusätzlich H₂ zugeführt werden.

In Figur 2 sind gleiche oder einander entsprechende Anlagenteile mit gleichen Bezugszeichen versehen. Bei der alternativen Ausführungsform der Figur 2 ist zwischen der Induktionsvorrichtung 5 und der Abzugsvorrichtung 7 eine Säule 26 aus Kohlenstoffträgern, insbesondere aus Holzkohle, angeordnet, in welche Säule 26 eine sekundäre Zuführvorrichtung 17 für einen Eduktstrom mündet. Die Säule 26 ist hierbei von einem Gehäuseabschnitt 6a des Gehäuses umgeben. Der sekundären Zuführvorrichtung 17 wird Edukt über eine entsprechende Zuleitung 18 zugeführt.

Die Abzugsvorrichtung 7 ist mit einer Kühlvorrichtung 8 für den sekundären Produktgasstrom verbunden, wobei die Kühlvorrichtung 8 von einem Wasseranschluss 8c gebildet ist, der in eine Ableitung 19 der Abzugsvorrichtung 7 mündet. Der sekundäre Produktgasstrom wird hierauf über die Ableitung 19 in einen Kondensator 14 geleitet, in dem in einem Gegenstromwäscher 20 eine Entstaubung des Produktgasstroms erfolgt. Der Kondensator 14 weist an seinem Boden eine Wanne 21 auf, in der sich flüssiges P₄ und H₂O sammeln. An dieser Stelle kann P₄ dekantiert werden. H₂O, CO₂ und H₂ fallen am oberen Ende des Kondensators 14 an. In einem entsprechenden Separator 22 können H₂O, CO₂ von H₂ getrennt werden und H₂ kann über die Zuführleitung 10 dem Prozess rückgeführt werden. Der Zuleitung 10 wird anfangs und kontinuierlich zur Bereitstellung eines Überschusses an H₂ Wasserstoffgas an einer Einleitungsstelle 23 zugeführt und unreine Phosphorsäure wird über einen Injektor 24 eingespritzt. Ein Kompressor 25 stellt den nötigen Systemdruck her. Überschüssiges H₂ kann über ein Ablassventil entfernt und gegebenenfalls stofflich (chemisch) oder thermisch verwertet werden.

## Patentansprüche

1. Verfahren zur reduktiven Gewinnung von elementarem Phosphor aus Phosphorsäure, insbesondere aus unreiner Phosphorsäure, **dadurch gekennzeichnet, dass** als Eduktstrom Phosphorsäure zusammen mit Wasserstoff als Reduktionsmittel in einem Reaktor (1) mit erhitzten Metallkörpern (4), insbesondere Metallkugeln (4), in Kontakt gebracht und zu einem Produktgasstrom von gasförmigem P₂, H₂O und H₂ umgesetzt wird.

2. Verfahren nach Anspruch 1, **dadurch gekennzeichnet, dass** die Metallkörper (4) aus einem ferromagnetischen Metall, bevorzugt einem eisenhaltigen Metall, weiter bevorzugt aus Stahl, der bevorzugt mit Nickel legiert ist, gebildet sind.

3. Verfahren nach Anspruch 1 oder 2, **dadurch gekennzeichnet, dass** Phosphorsäure mit einem Wasserstoff enthaltenden Gasstrom in den Reaktor (1) eingebracht wird, der die erhitzten Metallkörper (4) enthält.

4. Verfahren nach Anspruch 1, 2 oder 3, **dadurch gekennzeichnet, dass** die Phosphorsäure zur Reduktion durch die erhitzten Metallkörper (4) auf eine Temperatur von 1300°C bis 1400°C, bevorzugt 1350°C gebracht wird.

5. Verfahren nach einem der Ansprüche 1 bis 4, **dadurch gekennzeichnet, dass** die Metallkörper (4) durch Anlegen eines elektromagnetischen Wechselfelds bei einer Induktionsfrequenz von 400 Hz (Hertz) bis 600 Hz, bevorzugt 500 Hz induktiv erhitzt werden.

6. Verfahren nach einem der Ansprüche 1 bis 5, **dadurch gekennzeichnet, dass** als Metallkörper (4) Stahlkugeln (4) mit einem Durchmesser von 3 mm bis 8 mm, bevorzugt 4 mm bis 7 mm, weiter bevorzugt 5 mm bis 6 mm eingesetzt werden.

7. Verfahren nach einem der Ansprüche 1 bis 6, **dadurch gekennzeichnet, dass** die Metallkörper (4) im Reaktor (1) bewegt werden, bevorzugt durch Anlegen eines elektromagnetischen Wechselfelds, bevorzugt mit einer Frequenz von 80 Hz bis 120 Hz, weiter bevorzugt mit einer Frequenz von 100 Hz.

8. Verfahren nach einem der Ansprüche 1 bis 7, **dadurch gekennzeichnet, dass** mit dem Eduktstrom weiters P₂O₅ mit den erhitzten Metallkörpern (4) in Kontakt gebracht wird.

9. Verfahren nach einem der Ansprüche 1 bis 8, **dadurch gekennzeichnet, dass** der Produktgasstrom aus gasförmigem P₂, H₂O und H₂ abgezogen und zur Bildung von gasförmigem P₄ einer Abkühlung auf Temperaturen zwischen 280°C und 350 °C unterworfen wird, wobei bevorzugt die Wärme der Abkühlung des Produktgasstroms zur Erwärmung des Eduktstroms eingesetzt wird.

10. Verfahren nach Anspruch 9, **dadurch gekennzeichnet, dass** aus dem gekühlten Produktgasstrom gasförmiges P₄ zu flüssigem P₄ und gasförmiges H₂O zu flüssigem H₂O kondensiert und von H₂ abgetrennt werden und H₂ wieder der Reduktion zugeführt wird.

11. Verfahren nach einem der Ansprüche 1 bis 8, **dadurch gekennzeichnet, dass** der Produktgasstrom aus gasförmigem P₂, H₂O und H₂ in eine Säule (26) aus Kohlenstoffträgern, insbesondere aus Holzkohle, eingeleitet wird und in der Säule (26) mit zusätzlich in die Säule (26) eingebrachtem Eduktstrom gekühlt und reduziert wird.

12. Verfahren nach Anspruch 11, **dadurch gekennzeichnet, dass** aus der Säule (26) P₄, CO und H₂ als sekundärer Produktgasstrom abgezogen und einer Abkühlung auf Temperaturen zwischen 280°C und 350°C unterworfen wird, wobei bevorzugt die Abkühlung durch Zugabe von flüssigem Wasser erfolgt unter Umwandlung von CO aus dem sekundären Produktgasstrom zu CO₂ und weiterem gasförmigen H₂.

13. Verfahren nach Anspruch 12, **dadurch gekennzeichnet, dass** P₄, CO₂ und gasförmiges H₂ in ein Wasserbad geleitet werden, aus welchem P₄ abgetrennt wird.

14. Vorrichtung zur Durchführung des Verfahrens nach einem der Ansprüche 1 bis 13, umfassend einen von einem feuerfest ausgekleideten Gehäuse (6) gebildeten Reaktor (1), zumindest eine den Reaktor (1) an seiner Außenseite umgebende Induktionsvorrichtung (5), eine Zuführvorrichtung (2) für einen Eduktstrom aus Phosphorsäure zusammen mit Wasserstoff als Reduktionsmittel an einem unteren Ende (1a) des Reaktors (1) und eine Abzugsvorrichtung (7) für einen Produktgasstrom an einem oberen Ende (1b) des Reaktors (1), **dadurch gekennzeichnet, dass** der Reaktor (1) zumindest teilweise mit einer Schüttung aus Metallkörpern (4), bevorzugt Metallkugeln (4) befüllt ist.

15. Vorrichtung nach Anspruch 14, **dadurch gekennzeichnet, dass** die Abzugsvorrichtung (7) mit einer Wärmetauschervorrichtung (8) verbunden ist, die zur Abkühlung des Produktgasstroms auf Temperaturen zwischen 280°C und 350°C eingerichtet ist, wobei bevorzugt die Wärmetauschervorrichtung (8) von zumindest zwei regenerativen Wärmetauschern (8a, 8b) gebildet ist, die wechselweise und parallel vom Produktgasstrom durchströmbar sind und wobei bevorzugt die beiden regenerativen Wärmetauscher (8a, 8b) zur Regeneration alternierend vom Eduktstrom durchströmbar sind.

## Claims

1. A method for the reductive recovery of elemental phosphorus from phosphoric acid, in particular from impure phosphoric acid, **characterized in that** phosphoric acid is brought into contact with heated metal bodies (4), in particular metal balls (4), as reactant stream together with hydrogen as a reducing agent in a reactor (1) and is reacted to form a product gas stream of gaseous P₂, H₂O and H₂.

2. The method according to claim 1, **characterized in that** the metal bodies (4) are formed from a ferromagnetic metal, preferably an iron-containing metal, more preferably from steel, which is preferably alloyed with nickel.

3. The method according to claim 1 or 2, **characterized in that** phosphoric acid is introduced into the reactor (1) containing the heated metal bodies (4) with a hydrogen-containing gas stream.

4. The method according to claim 1, 2 or 3, **characterized in that** the phosphoric acid is brought to a temperature of 1300°C to 1400°C, preferably 1350°C, for reduction by the heated metal bodies (4).

5. The method according to any one of claims 1 to 4, **characterized in that** the metal bodies (4) are inductively heated by applying an alternating electromagnetic field at an induction frequency of 400 Hz (Hertz) to 600 Hz, preferably 500 Hz.

6. The method according to any one of claims 1 to 5, **characterized in that** steel balls (4) with a diameter of 3 mm to 8 mm, preferably 4 mm to 7 mm, more preferably 5 mm to 6 mm are used as the metal bodies (4).

7. The method according to any one of claims 1 to 6, **characterized in that** the metal bodies (4) are moved in the reactor (1), preferably by applying an alternating electromagnetic field, preferably with a frequency of 80 Hz to 120 Hz, more preferably with a frequency of 100 Hz.

8. The method according to any one of claims 1 to 7, **characterized in that** P₂O₅ is further brought into contact with the heated metal bodies (4) *via* the reactant stream.

9. The method according to any one of claims 1 to 8, **characterized in that** the product gas stream of gaseous P₂, H₂O and H₂ is extracted and subjected to cooling to temperatures between 280°C and 350°C to form gaseous P₄, preferably using the heat from the cooling of the product gas stream to heat the reactant stream.

10. The method according to claim 9, **characterized in that** gaseous P₄ is condensed from the cooled product gas stream to liquid P₄ and gaseous H₂O is condensed to liquid H₂O and separated from H₂ and H₂ is fed back to the reduction.

11. The method according to any one of claims 1 to 8, **characterized in that** the product gas stream of gaseous P₂, H₂O and H₂ is introduced into a column (26) of carbon carriers, in particular of charcoal, and is cooled and reduced in the column (26) with reactant stream additionally introduced into the column (26) .

12. The method according to claim 11, **characterized in that** P₄, CO and H₂ are withdrawn from the column (26) as a secondary product gas stream and subjected to cooling to temperatures between 280°C and 350°C, the cooling preferably being carried out by adding liquid water *via* conversion of CO from the secondary product gas stream to CO₂ and additional gaseous H₂.

13. The method according to claim 12, **characterized in that** P₄, CO₂ and gaseous H₂ are passed into a water bath from which P₄ is separated.

14. A device for carrying out the method according to any one of claims 1 to 13, comprising a reactor (1) formed by a refractory-lined casing (6), at least one induction device (5) surrounding the reactor (1) on its outer side, a feeder device (2) for a reactant stream of phosphoric acid together with hydrogen as a reducing agent at a lower end (la) of the reactor (1) and an extractor device (7) for a product gas stream at an upper end (1b) of the reactor (1), **characterized in that** the reactor (1) is at least partially filled with a bed of metal bodies (4), preferably metal balls (4).

15. The device according to claim 14, **characterized in that** the extractor device (7) is connected to a heat exchanger device which is set up for cooling the product gas stream to temperatures between 280°C and 350°C, preferably the heat exchanger device (8) being formed by at least two regenerative heat exchangers (8a, 8b) through which the product gas stream can flow alternately and in parallel and wherein preferably the product gas stream can flow alternately through the two regenerative heat exchangers (8a, 8b) for regeneration.

## Revendications

1. Procédé pour l'obtention, par réduction, de phosphore élémentaire à partir d'acide phosphorique, en particulier à partir d'acide phosphorique impur, **caractérisé en ce que**, en tant que courant d'éduit, de l'acide phosphorique est mis en contact avec des corps métalliques chauffés (4), en particulier des billes métalliques (4), conjointement avec de l'hydrogène comme agent de réduction dans un réacteur (1) et est transformé en un flux gazeux de produit de P₂, H₂O et H₂ gazeux.

2. Procédé selon la revendication 1, **caractérisé en ce que** les corps métalliques (4) sont constitués d'un métal ferromagnétique, de préférence d'un métal contenant du fer, de préférence, en sus, d'un acier, qui est de préférence allié avec du nickel.

3. Procédé selon la revendication 1 ou 2, **caractérisé en ce que** de l'acide phosphorique est introduit avec un flux gazeux contenant de l'hydrogène dans le réacteur (1) qui contient les corps métalliques (4) chauffés.

4. Procédé selon la revendication 1, 2 ou 3, **caractérisé en ce que** l'acide phosphorique est porté à une température de 1300°C à 1400°C, de préférence 1350°C, pour faire l'objet d'une réduction par les corps métalliques (4) chauffées.

5. Procédé selon l'une des revendications 1 à 4, **caractérisé en ce que** les corps métalliques (4) sont chauffés par induction par application d'un champ électromagnétique alternatif à une fréquence d'induction de 400 Hz (hertz) à 600 Hz, de préférence 500 Hz.

6. Procédé selon l'une des revendications 1 à 5, **caractérisé en ce que** des billes d'acier (4) d'un diamètre de 3 mm à 8 mm, de préférence de 4 mm à 7 mm, de préférence, en sus, de 5 mm à 6 mm, sont utilisées comme corps métalliques (4).

7. Procédé selon l'une quelconque des revendications 1 à 6, **caractérisé en ce que** les corps métalliques (4) sont déplacés dans le réacteur (1), de préférence par l'application d'un champ électromagnétique alternatif, de préférence à une fréquence de 80 Hz à 120 Hz, de préférence, en sus, à une fréquence de 100 Hz.

8. Procédé selon l'une quelconque des revendications 1 à 7, **caractérisé en ce que** le courant d'éduit permet en outre de mettre en contact du P₂O₅ avec les corps métalliques (4) chauffés.

9. Procédé selon l'une des revendications 1 à 8, **caractérisé en ce que** le flux gazeux de produit de P₂, H₂O et H₂ gazeux est extrait et est soumis à un refroidissement à des températures comprises entre 280°C et 350°C pour former le P₄ gazeux, la chaleur du refroidissement du flux gazeux produit étant de préférence utilisée pour chauffer le flux d'éduit.

10. Procédé selon la revendication 9, **caractérisé en ce que**, à partir du flux gazeux de produit refroidi, du P₄ gazeux est condensé en P₄ liquide et du H₂O gazeux est condensé en H₂O liquide et est séparé de H₂ et le H₂ est renvoyé à la réduction.

11. Procédé selon l'une des revendications 1 à 8, **caractérisé en ce que** le flux gazeux de produit de P₂, H₂O et H₂ gazeux est introduit dans une colonne (26) constituée de supports de carbone, en particulier de charbon de bois, et est refroidi et réduit dans la colonne (26) avec le flux d'éduit introduit en sus dans la colonne (26).

12. Procédé selon la revendication 11, **caractérisé en ce que** les P₄, CO et H₂ sont retirés de la colonne (26) comme flux gazeux de produit secondaire et sont soumis à un refroidissement à des températures comprises entre 280°C et 350°C, le refroidissement s'effectuant de préférence par l'ajout d'eau liquide convertissant le CO du flux gazeux de produit secondaire en CO₂ et en H₂ gazeux supplémentaire.

13. Procédé selon la revendication 12, **caractérisé en ce que** le P₄, le CO₂ et le H₂ gazeux sont passés dans un bain-marie dont le P₄ est séparé.

14. Dispositif pour la mise en oeuvre du procédé selon l'une des revendications 1 à 13, comprenant un réacteur (1) formé d'un boîtier (6) garni d'un revêtement ignifuge, au moins un dispositif d'induction (5) entourant l'extérieur du réacteur (1), un dispositif d'alimentation (2) pour un courant d'éduit d'acide phosphorique conjointement avec de l'hydrogène comme agent réducteur à une extrémité inférieure (1a) du réacteur (1) et un dispositif d'extraction (7) pour un flux gazeux produit à une extrémité supérieure (1b) du réacteur (1), **caractérisé en ce que** le réacteur (1) est au moins partiellement rempli d'un lit de corps métalliques (4), de préférence des billes métalliques (4).

15. Dispositif selon la revendication 14, **caractérisé en ce que** le dispositif d'extraction (7) est relié à un dispositif échangeur de chaleur (8) qui est configuré pour refroidir le flux gazeux de produit à des températures comprises entre 280°C et 350°C, le dispositif échangeur de chaleur (8) étant formé, de préférence, d'au moins deux échangeurs de chaleur régénératifs (8a, 8b), à travers lesquels le flux gazeux de produit peut circuler alternativement et en parallèle, et de préférence les deux échangeurs de chaleur régénératifs (8a, 8b) peuvent circuler alternativement à travers le courant d'éduit aux fins de la régénération.
